# EUROPEAN PATENT SPECIFICATION

(11) **EP 3 209 457 B1**
(45) Date of publication and mention of the grant of the patent: **16.03.2022**
(21) Application number: 15805098.9
(22) Date of filing: 19.10.2015
(51) Int. Cl.: B23K 37/02, B23K 26/00, B23Q 1/01

(54) **MACHINE FOR PROCESSING OF VOLUMETRIC METAL OBJECTS**
MASCHINE ZUR VERARBEITUNG VON VOLUMETRISCHEN METALLGEGENSTÄNDEN
MACHINE DE TRAITEMENT D'OBJETS MÉTALLIQUES VOLUMÉTRIQUES

(30) Priority: 20.10.2014 BG 287314
(43) Date of publication of application: 30.08.2017
(73) Proprietor: Red Steel Ltd., 1632 Sofia (BG)
(72) Inventor: VLAEV, Ivan Kolev, 1632, Sofia (BG); VLAEV, Krasimir Ivanov, 1632, Sofia (BG)
(74) Representative: Neykov, Neyko Hristov
(86) International application number: PCT/BG2015/000034
(87) International publication number: WO 2016/061645

(56) References cited:
- EP-A1- 0 634 247
- DE-A1- 19 810 333
- JP-A- S5 813 490
- US-A1- 2013 156 522

## Description

### Field of the invention

The invention refers to a machine for 3D processing of volumetric metal objects with random shapes and sizes, in particular for thermal and / or laser cutting of holes and random contours in metal cabinets in their assembled state, where the treated surfaces may be tilted, as well as non flat configuration. The machine is also suitable for processing of sheet materials. A machine according to the preamble of claim 1 is known from document DE 198 10 333 A1.

### Background of the invention

Various areas of industry require manufacturing of volumetric metal cabinets, which are intended to contain electrical regulating, switching and controlling elements with various purposes, as well as elements with other purposes. Such metal cabinets are manufactured first separately, such as bottom side, back side, doors, internally dividing elements or partitioning elements, and then mechanically assembling all the elements according to the specific requirements for the metal cabinet, or welding them into a permanent single-piece construction. On the surrounding and internal surfaces of the finished metal cabinets certain elements must be installed.

There are known machines for processing of metal cabinets, in particular those for creating openings in electrical cabinets designated for installation of technical elements with various purposes, where the openings are shaped by milling and thermal cutting.

The execution of various openings and slots is achieved either by processing the individual surrounding surfaces/planes by manually re-positioning (turning) of the cabinet towards the working area of the machine when the cabinet is monolithic, or by sequentially processing the individual components after disassembly. The processing of metal cabinets in this manner requires many manual operations, which not only result in loss of time, but also introduce inaccuracies due to re-positioning.

There are known machines for laser cutting of flat sheet metal, which consist of cross beam which moves over the working table which is designed for the emplacement of the processed object, for example, a flat metal sheet.

A combined machine for laser cutting and drilling of a flat sheet metal is known, EP0491747B1, which consists of a frame with working table, wherein onto the frame, on a portal construction of vertical and horizontal beams, is attached a movable manipulator with a laser cutting head mounted on it, with the option for movement along a coordinate system with two mutually orthogonal axes X and Y.

A machine for combined laser cutting and drilling of a flat metal sheet is known, EP2444195, which consists of an immovable C- shaped frame, wherein a coordinate table, with the option for movement along a coordinate system with two mutually orthogonal axes X and Y, is mounted onto the lower part of the frame, while to the upper part of the frame are fixed a laser cutting head and a drilling head, each driven by a separate driving mechanism, preferably - by linear motors.

The shortcoming of the known laser cutting machines is expressed in their limited application - for example they are only for cutting sheet materials as their construction, particularly that of the driving mechanisms and the freedom of movement of the cutting head, does not allow the processing of volumetric objects.

The field of electrical engineering requires the manufacturing of metal cabinets, which are intended to contain electrical regulating, switching and controlling elements with various purposes, as well as elements with other purposes, on a surface with general position in space.

### Technical field of the invention.

Taking into account the above stated known level of technology in this area, the aim of the invention is to propose a machine for the processing of metal cabinets, which allows for processing of the surrounding surfaces of large objects via thermal cutting, while providing high precision of processing of all openings and / or slots.

The above mentioned aim is achieved with a machine for treating volumetric metal objects in an assembled state, which is a five-coordinate CNC /computer numeric control/ machine, with respectively three translational and two rotational digitally controlled axes, which provide the option for arbitrary placement of the working body in space and smooth movement along the entire range of motion.

The machine consists of a frame, wherein on the lower part of the frame is mounted a table, with option for manipulator with movement along a coordinate system with two mutually orthogonal axes X and Y, laser cutting tool and a drilling head powered by a separate drive mechanism.

According to the invention, at the outer/end parts of the frame, on the horizontally oriented beams are installed and fixed linear guide ways defining the Y axis, on top of which are placed two vertically oriented carriages, parallel to each other, wherein the carriages are connected at their upper ends to a cross beam, oriented along the X-axis and perpendicular to the Y axis.

On the cross beam are installed at least two linear guides, to which a horizontally oriented carriage is connected, with the option of movement along the X axis, while a ram is attached to the carriage with guide ways installed to it, which move with the carriage along the X axis and provide the option for vertical motion along the Z axis.

At the lower end of ram are installed two rotating axes, respectively "C" axis, which can rotate around a vertical axis, and "B" axis which can rotate around the horizontal axis, wherein the driving mechanism of the "B" axis is mounted onto the driving unit of the "C" axis, and onto the driving unit of the "C" axis is mounted a driving unit of an additional translational axis "LH", equipped with a movable carriage, onto which the laser cutting head is attached and the axis of the carriage and the laser cutting head are coaxially oriented.

In the machine for processing cabinets in an assembled state, a fiber laser with an impulse operation mode is used as the acting laser cutting tool.
In a sample version of the machine, subject of the utility model, the driving mechanism of "B" axis is installed onto the actuation unit of the "C" axis.

It is preferable that the additional relaying axis "LH" be coaxial to the axis of the cutting head, as this movement is used to compensate for the lack of flatness of the processed surface and to maintain a constant distance between the cutting head /for example laser head/ and the metal surface.

For achieving a smooth movement of the driving mechanisms of translational axes X, Y, Z and the rotary axes B and C, each movement is accomplished with mechanisms without internal clearance(backlash), using ball screws and wave gearboxes.

According to one optional execution of the machine, the translational axes X, Y, Z LH are driven by linear motors, and the rotational axes B and C are driven by rotary motors.

A secondary work head is installed on the translational axis LH, which can be a drilling or a threading head.

In accordance with the invention, the machine for processing of volumetric objects from metal differs by its higher capacity for processing slots and holes in the surrounding faces of metal cabinets, which is made through five-coordinate machine with Computer Numerical Control(CNC), respectively having four translational(X,Y,Z and LH) and two rotational (B,C) digitally controlled axes, providing opportunity for arbitrary positioning of the processing unit in the space and smooth motion along the whole stroke .

The described opportunities allow significant decrease of the labor intensity and the time for processing volumetric metal cabinets, designated for the electric industry as well as for processing of volumetric metal objects, which require various operations by type and nature in their internal space.

### Brief Description of the Drawings

In the below description will be presented an example of the machine for processing of metal volumetric objects in assembled state, made visual by the accompanying drawings, whereas:

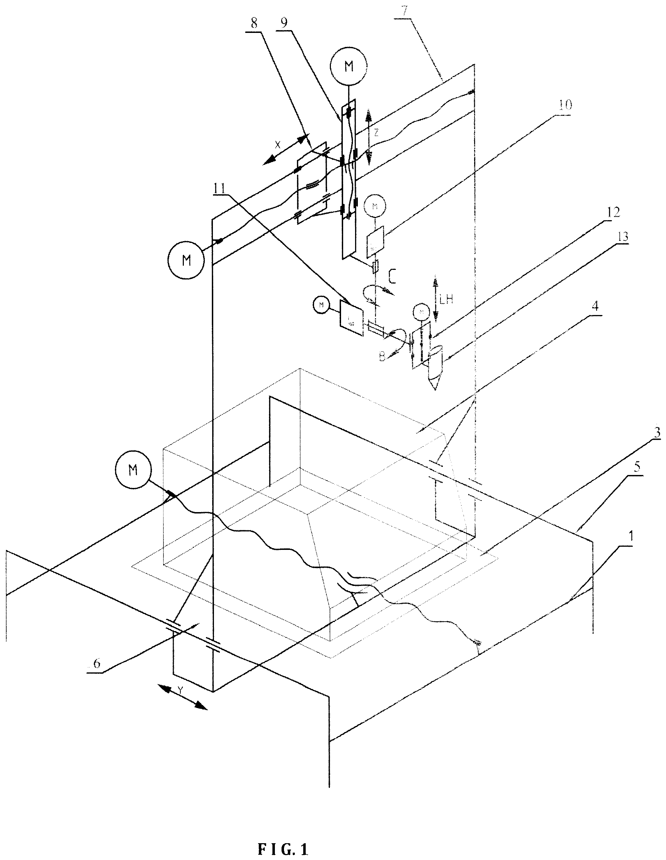

Fig.1 - shows general axonometric view of the machine

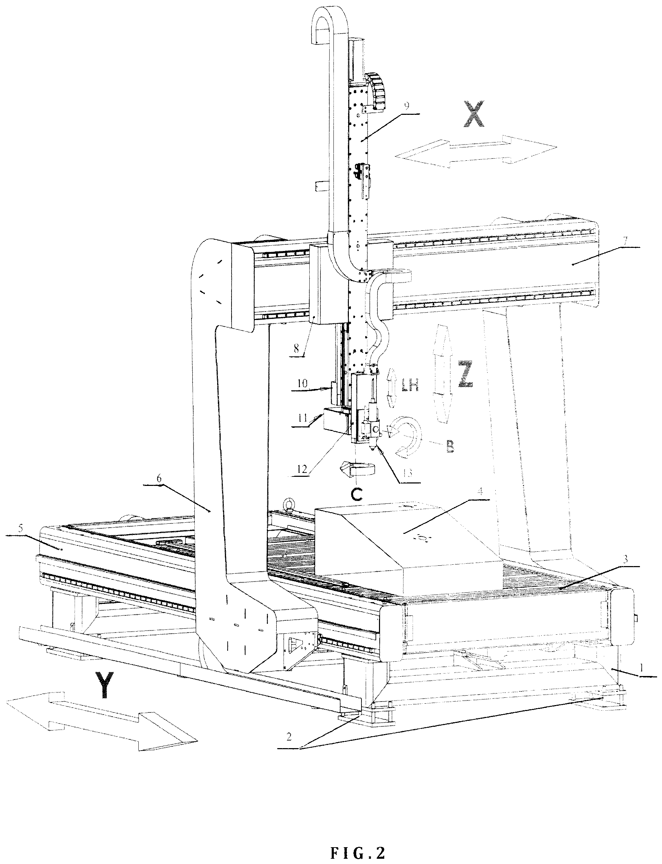

Fig.2 - kinematic scheme of the machine for processing cabinets in assembled state

### Detailed Description of the invention

One embodiment of the machine for processing of outer surfaces of volumetic objects in assembled state according to the utility model is described below as the constructive elements used and their mutual orientation do not restrict the use of other equivalent elements or materials with the same properties and functionality.

The machine for processing of volumetric objects is suitable for processing of metal cabinets for the electric industry wherein in assembled state on the body of the metal cabinet is possible to be cut slots, holes or other cuts, determined in advance by location, form and size.

The machine consists of frame 1, places on four leveling legs 2 whereupon on frame 1 is fixed working table 3, on the top surface of which is placed the processed volumetric object 4 - cabinet or two-dimensional object - sheet material. At the outer parts of the frame 1 on a horizontally oriented beams 5 are fixed linear guide ways, on which are placed two vertically oriented carriages 6, parallel to each other. In their upper part the carriages 6 are connected with cross beam 7, horizontally oriented towards X axis, which beam is positioned perpendicularly toward the Y axis.

On the cross beam 7 are installed at least two linear guide ways, to which is horizontally attached carriage 8, having the option to move along X axis. Ram 9 is installed to the carriage-8, with an option to move in vertical direction along Z axis, as at the same time it carries guide ways along the mentioned Z axis, which guide ways move along X axis through the carriage 8.

At the bottom of the ram 9 are installed two rotary axes, respectively-vertically oriented "C" axis 10 and "B" axis 11 perpendicular to the "C" axis 10, equipped with driving mechanism. Thus the driving mechanism of "B" axis 11 is installed on the processing unit of "C" axis 10. At the processing unit of "C" axis 10 is installed also driving mechanism of a translational axis "LH" 12, equipped with movable carriage (saddle), on which is fixed cutting tool - laser cutting head 13, as the axis "B" 11 and the carriage of "LH" 12 have perpendicular axes.

### Machine operation according to the invention

The machine for processing of metal cabinets, in assembled state according to the utility model is used in the following way: the processed object, for example assembled body of a metal cabinet, designated for installation of electro-technical elements has to be placed on a worktable-3 on a certain position from the machine's coordinate system. The processing is realized consequently surface after surface, according to a program, set in advance in the CNC (Computer Numerical Control) system.

By driving the described three translational axes X, Y, Z is provided the necessary accurate positioning in the working volume of the machine and the rotation around the vertical and horizontal axis provides the normal (perpendicular to the processed surface) positioning of the laser cutting head 13 to the respective processed surface. An additional translational analog axis coaxial to the axis of the laser cutting head 13 provides a constant distance between the working tool and the processed surface by compensating the deviation from the nominal location (for example the non-flatness of the flat surfaces), which is necessary for normal functioning of a thermal cutting.

The drive of the rotary axes "B" and "C" and translational axes "X" "Y" "Z" "LH" is performed by mechanisms without backlash, which allows high accuracy and smoothness of movement of the working head.

An additional option is threading of drilled holes. For this purpose is mounted tapping device, positioned coaxial with the laser cutting head. It is not shown on the figures.

## Claims

1. Machine for the processing of volumetric objects in an assembled state by thermal cutting, consisting of a frame /1/, whereupon to the lower part of the frame /1/ is mounted a work table /3/, including manipulator having the possibility of movement in a coordinate system with two mutually perpendicular axes X and Y where is provided a laser cutting head/13/ wherein in the end parts of the frame /1/, on the horizontally oriented beams /5/ are fixed linear guide ways, on which are placed two vertical oriented carriages /6/, parallel one to another, wherein at their upper end the carriages /6/ are connected with a cross beam /7/, oriented toward axis X and perpendicular to axis Y, and wherein on the cross beam /7/ are mounted at least two linear guide ways to which a horizontally oriented carriage /8/ is connected, with the possibility of movement along the axis X, wherein to the carriage / 8 / is mounted a ram /9/ with attached guide ways on it, which move in the carriage /8/ with the possibility of movement in the vertical direction along axis Z, wherein at the bottom end of the ram /9/ are mounted two rotary axes, oriented perpendicular one to another, respectively the vertical axis "C" /10/ and axis "B" which can rotate in horizontal plane /11/, the machine **characterised in that**: to the rotary unit of the axis "B" is mounted a driving mechanism of a translational axis "LH" /12/, on which translational axis is mounted said laser cutting head /13/ and a secondary work head, which can be a drilling or a threading head powered with a separate driving mechanism.

2. Machine for the processing of volumetric objects in an assembled state according to claim 1, **characterized in that** as a work head used laser cutting head /13/, especially a fiber laser with pulse mode.

3. Machine for the processing of volumetric objects in an assembled state according to claim 1, **characterized in that** the driving mechanism of the axis "B" is mounted on the output shaft of the axis "C".

4. Machine for the processing of volumetric objects in an assembled state according to claim 1, **characterized in that**, each of the translational axes X, Y, Z are driven by linear motors, and the rotational axes B and C are driven by rotary motors.

5. Machine for the processing of volumetric objects in an assembled state according to claim 1, **characterized in that** each driving of the translational X, Y, Z and rotation B, C axes is provided with mechanisms without backlash, comprising ball screw couples and wave motors .

## Patentansprüche

1. Maschine zur Verarbeitung von volumetrischen Gegenständen in einem zusammengesetzten Zustand durch thermisches Schneiden, bestehend aus einem Rahmen /1/, wobei an den unteren Teil des Rahmens /1/ ein Arbeitstisch /3/ montiert ist, der eine Bedieneinheit beinhaltet, die die Möglichkeit der Bewegung in einem Koordinatensystem mit zwei zueinander senkrechten Achsen X und Y aufweist, an dem ein Laserschneidkopf /13/ bereitgestellt ist, wobei in den Endteilen des Rahmens /1/ an den horizontal ausgerichteten Trägern /5/ lineare Führungsbahnen befestigt sind, an denen zwei vertikal ausgerichtete Schlitten /6/ parallel zueinander positioniert sind, wobei die Schlitten /6/ an deren oberen Ende mit einem Querträger /7/ verbunden sind, der zur Achse X und senkrecht zur Achse X ausgerichtet ist, und wobei an dem Querträger /7/ mindestens zwei lineare Führungsbahnen montiert sind, mit denen ein horizontal ausgerichteter Schlitten /8/ mit der Möglichkeit der Bewegung entlang der Achse X verbunden ist, wobei an dem Schlitten /8/ eine Ramme /9/ mit daran befestigten Führungsbahnen montiert ist, die sich in dem Schlitten /8/ mit der Möglichkeit der Bewegung in der vertikalen Richtung entlang der Achse Z bewegen, wobei an dem unteren Ende der Ramme /9/ zwei Drehachsen montiert sind, die senkrecht zueinander ausgerichtet sind, bei denen es sich um die vertikale Achse "C" /10/ bzw. Achse "B" handelt, die sich in horizontaler Ebene /11/ drehen können, wobei die Maschine durch Folgendes gekennzeichnet ist:
an der Dreheinheit der Achse "B" ist ein Antriebsmechanismus einer Translationsachse "LH"/12/ montiert, wobei an der Translationsachse der Laserschneidkopf /13/ und ein sekundärer Arbeitskopf, bei dem es sich um einen Bohr- oder einen Gewindekopf mit einem separaten Antriebsmechanismus handeln kann, montiert sind.

2. Maschine zur Verarbeitung von volumetrischen Gegenständen in einem zusammengesetzten Zustand nach Anspruch 1, **dadurch gekennzeichnet, dass** als Arbeitskopf der Laserschneidkopf /13/ verwendet wird, insbesondere ein Faserlaser mit Impulsbetrieb.

3. Maschine zur Verarbeitung von volumetrischen Gegenständen in einem zusammengesetzten Zustand nach Anspruch 1, **dadurch gekennzeichnet, dass** der Antriebsmechanismus der Achse "B" an der Abtriebswelle der Achse "C" montiert ist.

4. Maschine zur Verarbeitung von volumetrischen Gegenständen in einem zusammengesetzten Zustand nach Anspruch 1, **dadurch gekennzeichnet, dass** jede der Translationsachsen X, Y, Z von linearen Motoren angetrieben wird und die Drehachsen B und C von Drehmotoren angetrieben werden.

5. Maschine zur Verarbeitung von volumetrischen Gegenständen in einem zusammengesetzten Zustand nach Anspruch 1, **dadurch gekennzeichnet, dass** jeder Antrieb der Translationsachsen X, Y, Z und der Drehachsen B, C mit Mechanismen ohne Gegenbewegung bereitgestellt ist, umfassend Kugelumlaufspindelkopplungen und Wellenmotoren.

## Revendications

1. Machine de traitement d'objets volumétriques dans un état assemblé par découpe thermique, consistant en un cadre /1/, dans laquelle sur la partie inférieure du cadre /1/, est monté une table de travail /3/, incluant un manipulateur ayant la possibilité de mouvement dans un système de coordonnées avec deux axes X et Y mutuellement perpendiculaires où est prévue une tête de découpe laser /13/ dans laquelle
dans les parties d'extrémité du cadre /1/, sur les poutres /5/ orientées horizontalement se trouvent des voies de guidage linéaires fixes, sur lesquelles sont placés deux chariots /6/ orientés verticalement, parallèles l'un à l'autre, dans laquelle au niveau de leur extrémité supérieure, les chariots /6/ sont raccordés à une poutre traverse /7/, orientée vers l'axe X et perpendiculaire à l'axe Y, et dans laquelle
sur la poutre traverse /7/, sont montées au moins deux voies de guidage linéaires auxquelles est connecté un chariot /8/ orienté horizontalement, avec la possibilité de mouvement le long de l'axe X, dans laquelle
sur le chariot /8/, est monté un vérin /9/ avec voies de guidage fixées dessus, qui se déplacent dans le chariot /8/ avec la possibilité de mouvement dans la direction verticale le long de l'axe Z, dans laquelle au niveau de l'extrémité basse du vérin /9/, sont montés deux axes rotatifs, orientés perpendiculairement l'un à l'autre, respectivement l'axe vertical « C » /10/ et l'axe « B » qui peuvent tourner dans un plan horizontal /11/, la machine étant **caractérisée en ce que** :
sur l'unité rotative de l'axe « B », est monté un mécanisme d'entraînement d'un axe de translation « LH » /12/, axe de translation sur lequel sont montées ladite tête de découpe laser /13/ et une tête de travail secondaire, qui peut être une tête de perçage ou de filetage alimentée avec un mécanisme d'entraînement séparé.

2. Machine de traitement d'objets volumétriques dans un état assemblé selon la revendication 1, **caractérisée en ce qu'**une tête de découpe laser /13/, notamment un laser à fibre à mode pulsé est utilisée, comme tête de travail.

3. Machine de traitement d'objets volumétriques dans un état assemblé selon la revendication 1, **caractérisée en ce que** le mécanisme d'entraînement de l'axe « B » est monté sur l'arbre de sortie de l'axe « C ».

4. Machine de traitement d'objets volumétriques dans un état assemblé selon la revendication 1, **caractérisée en ce que**, chacun des axes de translation X, Y, Z est entraîné par des moteurs linéaires, et les axes de rotation B et C sont entraînés par des moteurs rotatifs.

5. Machine de traitement d'objets volumétriques dans un état assemblé selon la revendication 1, **caractérisée en ce que** chaque entraînement des axes de translation X, Y, Z et de rotation B, C est pourvu de mécanismes sans jeu, comprenant des paires de vis à billes et des moteurs à ondes.
